# FASCICULE DE BREVET EUROPEEN

(11) **EP 0 776 915 B1**
(45) Date de publication et mention de la délivrance du brevet: **26.02.2003**
(21) Numéro de dépôt: 96402264.4
(22) Date de dépôt: 24.10.1996
(51) Int. Cl.: C08F 265/04, C08F 283/12, C08F 291/02, C08L 101/00

(54) **Additif choc du type noyau/coquille pour polymères thermoplastiques**
Kern-Schale Zähigkeitsvermittler für thermoplastische Polymere
Core/shell impact modifier for thermoplastic polymers

(30) Priorité: 27.10.1995 FR 9512706
(43) Date de publication de la demande: 04.06.1997
(73) Titulaire: ELF ATOCHEM NORTH AMERICA, INC., Philadelphia, Pennsylvania 19103-3222 (US)
(72) Inventeur: Bertelo, Chris, Scotch Plains, New Jersey 07076 (US); Meunier, Gilles, 64230 Mazerolles (FR); Lermite, André, 64230 Lescar (FR); Dargelos, Pascale, 64140 Billère (FR); Drujon, Xavier, 64110 Jurancon (FR)
(74) Mandataire: Treuil, Claude

(56) Documents cités:
- EP-A- 0 269 324
- EP-A- 0 477 886
- EP-A- 0 536 935
- FR-A- 2 090 558

## Description

L'invention a pour objet un additif choc du type noyau/coquille ainsi qu'une composition renfermant un polymère thermoplastique, notamment un homopolymère du chlorure de vinyle ou un copolymère à teneur majoritaire en chlorure de vinyle, un additif choc du type noyau/coquille et éventuellement d'autres additifs.

Certaines résines synthétiques, notamment les résines à base de polychlorure de vinyle ou de copolymère à teneur majoritaire en chlorure de vinyle sont largement utilisées dans l'industrie du bâtiment en raison, notamment, de leur faible prix et de leurs bonnes propriétés physiques et/ou chimiques.

Néammoins, elles présentent de faibles résistances au choc à température ambiante ou à basse température ou bien également après vieillissement.

On a proposé de pallier ces défauts en incorporant à ces résines thermoplastiques des produits appelés additifs choc qui sont généralement des polymères présentant un certain caractère élastomérique.

Dans le brevet US 3678133, on décrit un additif choc du type noyau/coquille constitué d'un noyau élastomèrique et d'une coquille thermoplastique plus rigide.

Le noyau élastomérique est obtenu par polymérisation d'un mélange de monomères comprenant au moins 50 % en poids d'un acrylate d'alkyle dont le groupe alkyle a de 2 à 8 atomes de carbone et une proportion mineure d'un agent de réticulation. L'acrylate d'alkyle préféré est l'acrylate de n-butyle.

Il est également mentionné que les acrylates d'alkyle ayant de plus longues chaînes présentent l'inconvénient de se polymériser plus difficilement. L'acrylate de 2-éthylhexyle a également été exemplifié.

La coquille thermoplastique rigide est obtenue par polymérisation d'un mélange de monomères comprenant 40 % à 100 % en poids de méthacrylate d'alkyle dont le groupe alkyle comporte 1 à 4 atomes de carbone.

L'additif choc dans ce brevet est réalisé d'une façon telle que la polymérisation de la coquille thermoplastique rigide s'effectue à la surface de la phase élastomérique, de préférence en une couche séparée qui enrobe plus ou moins totalement le noyau élastomérique.

Bien que les additifs choc ainsi obtenus améliorent de façon notable la résistance au choc, à température ambiante des résines les contenant, on constate cependant une perte des propriétés mécaniques notamment une perte de la résistance au choc à basse température desdites résines.

On a maintenant trouvé un additif choc du type noyau/coquille consistant en un noyau à base d'acrylate d'alkyle et une coquille à base de polyméthacrylate d'alkyle, caractérisée en ce que ledit additif choc comprend de
a) 70 % à 90 % en poids et, de préférence 75 % à 85 % d'un noyau réticulé élastomérique qui se compose:
   1) de 20% à 90% en poids d'un coeur consistant en un copolymère (I) d'acrylate de n-alkyle dont le groupe alkyle a un nombre de carbone allant de 5 à 12, et de préférence allant de 5 à 8, ou d'un mélange d'acrylates d'alkyle dont le groupe alkyle, linéaire ou ramifié,a un nombre de carbone allant de 2 à 12 et, de préférence allant de 4 à 8; d'un agent réticulant polyfonctionnel possédant dans sa molécule des groupements insaturés dont au moins un est de type vinylique CH₂=C<, et, éventuellement d'un agent de greffage polyfonctionnel possédant dans sa molécule des groupements insaturés dont au moins un est de type allylique CH₂=CH-CH₂-, ledit coeur renfermant une quantité molaire d'agent réticulant et, éventuellement d'agent de greffage allant de 0,05 % à 5 % et, de préférence, une quantité comprise entre 0,5 % et 1,5 % ;
   2) de 80 % à 10 % en poids d'une enveloppe consistant en un copolymère (Il) d'acrylate de n-alkyle dont 5 le groupe alkyle a un nombre de carbone allant de 4 à 12 et, de préférence allant de 4 à 8 ou d'un mélange d'acrylates d'alkyle tels que définis précédemment en 1) et d'un agent de greffage polyfonctionnel possédant dans sa molécule des groupements insaturés dont au moins un est de type allylique CH₂=CH-CH₂-, ladite enveloppe renfermant une quantité molaire d'agent de greffage allant de 0,05 % à 2,5 % et, de préférence, une quantité comprise entre 0,5 % et 1,5 % ;
b/ 30 % à 10 % en poids et de préférence 25 % à 15 % d'une coquille greffée sur ledit noyau constituée par un polymère d'un méthacrylate d'alkyle dont le groupe alkyle a un nombre de carbone allant de 1 à 4 ou bien par un copolymère statistique d'un méthacrylate d'alkyle dont le groupe alkyle a un nombre de carbone allant de 1 à 4 et d'un acrylate d'alkyle dont le groupe alkyle a un nombre de carbone allant de 1 à 8, renfermant une quantité molaire d'acrylate d'alkyle allant de 5 % à 40 %, et, de préférence comprise entre 10 % et 20 %.

A titre d'illustration d'acrylates de n-alkyle utilisables selon la présente invention pour former le copolymère (I) on citera l'acrylate de n-pentyle, l'acrylate de n-hexyle, l'acrylate de n-heptyle, et tout particulièrement l'acrylate de n-octyle.

A titre d'illustration d'acrylates de n-alkyle utilisables selon la présente invention pour former le copolymère (Il), on citera l'acrylate de n-butyle, l'acrylate de n-pentyle, l'acrylate de n-hexyle, l'acrylate de n-heptyle, et tout particulièrement l'acrylate de n-octyle.

L'acrylate de n-alkyle utilisable pour former les copolymères (I) et/ou (Il) peut être identique ou différent.

A titre d'illustration d'acrylates d'alkyle linéaires ou ramifiés utilisables selon la présente invention pour la formation des mélanges d'acrylates d'alkyle constituant les copolymères (I) et/ou (II), on citera l'acrylate d'éthyle, l'acrylate de n-propyle, l'acrylate de n-butyle, l'acrylate d'amyle, l'acrylate de 2-méthylbutyle, l'acrylate de 2-éthylhéxyle, l'acrylate de n-héxyle, l'acrylate de n-octyle, l'acrylate de n-décyle, l'acrylate de n-dodécyle, l'acrylate de triméthyl3,5,5-hexyle.

Dans le cas où l'on utilise un mélange d'acrylates d'alkyle pour réaliser les copolymères (I) et/ou (II) on utilisera une quantité pondérale en acrylate de n-alkyle au moins égale à 10 % en poids du mélange d'acrylates d'alkyle et, de préférence, une quantité comprise entre 20 % et 80 %.

Comme précédemment, on peut utiliser pour former les copolymères (I) et/ou (II) un mélange d'acrylates d'alkyle identique ou différent.

Selon la présente invention, on préfère utiliser les acrylates de n-alkyle et, tout particulièrement l'acrylate de n-octyle pour former les copolymères (I) et (II).

Si l'on utilise un mélange d'acrylates d'alkyle pour former les copolymères (I) et/ou (II) on utilisera de préférence de 20 % à 80 % en poids d'acrylate de n-octyle, et de préférence 80 % à 20 % en poids d'acrylate de n-butyle.

A titre d'illustration de méthacrylates d'alkyle utilisables pour former la coquille gréffée sur le noyau élastomérique réticulé selon la présente invention, on citera le méthacrylate d'éthyle, le méthacrylate de n-propyle, le méthacrylate d'isopropyle, le méthacrylate de n-butyle, le méthacrylate d'isobutyle, et tout particulièrement le méthacrylate de méthyle.

Selon la présente invention, l'agent réticulant utilisé pour former le copolymère (I) peut être notamment choisi parmi les dérivés possédant au moins deux doubles liaisons de type vinylique ou bien possédant une ou plusieurs doubles liaisons de type vinylique et au moins une double liaison de type allylique. On utilisera de préférence des composés possédant dans leurs molécules un majorité de doubles liaisons de type vinylique.

A titre d'illustration de tels agents réticulants, on citera les divinylbenzenes, les (meth)acrylates de polyalcools tels que le triacrylate ou le triméthacrylate de triméthylolpropane, l'acrylate ou le méthacrylate d'allyle, les diacrylates ou les diméthacrylates d'alkylène glycol ayant 2 à 10 atomes de carbone dans la chaîne alkylène et notamment le diacrylate ou le diméthacrylate d'éthylène glycol, le diacrylate ou le diméthacrylate de butane diol-1,4, le diacrylate ou le diméthacrylate d'hexane diol-1,6, le diacrylate ou le diméthacrylate de polyoxyalkylène glycol de formule 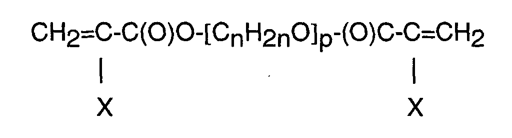 dans laquelle X représente un atome d'hydrogène ou le radical méthyle, n est un nombre entier allant de 2 à 4 et p est un nombre entier allant de 2 à 20 et notamment le diacrylate ou le diméthacrylate de polyoxyéthylène glycol pour lequel le radical polyoxyéthylène a une masse moléculaire d'environ 400 (formule précitée avec n=2 et p=9).

Selon la présente invention, l'agent de greffage utilisé pour former le copolymère (II) peut être notamment choisi parmi les dérivés possédant au moins deux doubles liaisons de type allylique ou bien possédant une ou plusieurs doubles liaisons de type allylique et au moins une double liaison de type vinylique.

On utilisera de préférence des composés possédant dans leurs molécules une majorité de doubles liaisons de type allylique.

A titre d'illustration de tels agents de greffage, on citera le maléate de diallyle, l'itaconate de diallyle, le méthacrylate ou l'acrylate d'allyle, le triallyle cyanurate, le triallyle d'isocyanurate, le diallyltérephtalate, le triallyle trimésate.

L'invention concerne également une composition comprenant un polymère thermoplastique et l'additif choc tel que défini ci-avant. Le polymère thermoplastique peut consister en un ou plusieurs polymères du type des polycondensats, notamment les polyamides, les polyétheresteramides (PEBAX), les polyesters tels que le polybutylène téréphtalate, les polycarbonates, les alliages des polymères précités tels que les alliages de polycarbonates et de polyesters tels que les XENOY. Le polymère thermoplastique peut consister également en un ou plusieurs polymères choisis dans le groupe formé par les polyméthacrylates d'alkyle et notamment le polyméthacrylate de méthyle, par les homopolymères du chlorure de vinyle qui peuvent être éventuellement surchlorés et les copolymères qui résultent de la copolymérisation du chlorure de vinyle avec un ou plusieurs comonomères éthyléniquement insaturés et qui renferment au moins 80 % en poids de chlorure de vinyle polymérisé. A titre d'exemple de monomères, pour la préparation de tels copolymères conviennent notamment les halogénures de vinylidène comme le chlorure ou le fluorure de vinylidène, les carboxylates de vinyle comme l'acétate de vinyle, le propionate de vinyle, le butyrate de vinyle, les acides acrylique et méthacrylique ainsi que les nitriles, amides et esters d'alkyle qui en dérivent, notamment l'acrylonitrile, l'acrylamide, le méthacrylamide, le méthacrylate de méthyle, l'acrylate de méthyle, l'acrylate de butyle, l'acrylate d'éthyle, l'acrylate d'éthyl-2 hexyle, les dérivés vinylaromatiques tels que le styrène, le vinylnaphtalène, les oléfines telles que le bicyclo (2.2.1) hept-2-ène, le bicyclo (2.2.1) hepta-2,5-diène, l'éthylène, le propène, le butène-1.

Le polymère thermoplastique peut consister également en un homopolymère d'halogénure de vinylidène comme le 1,1-dichloroéthylène ou le 1,1-difluoroéthylène.

De préférence, le polymère thermoplastique est un homopolymère du chlorure de vinyle ou un polybutylène téréphtalate.

La teneur préférée en additif choc incorporé dans le polymère thermoplastique est comprise entre 1 et 30 parties en poids, et, de préférence entre 5 et 10 parties en poids pour 100 parties en poids du polymère thermoplastique mis en oeuvre.

Pour rendre compte de la masse moléculaire de l'additif choc, on peut définir une viscosité à l'état fondu qui varie dans le même sens. Ladite viscosité à l'état fondu peut se situer dans une gamme assez large sous réserve d'avoir une bonne dispersion de l'additif choc au cours des opérations de mise en oeuvre de la composition de résine incluant ledit additif. Comme grandeur représentative de cette viscosité à l'état fondu, on convient de prendre la valeur du couple résistant d'un rhéomètre Brabender renfermant 50 g d'additif choc et opérant à la température de 200° C avec une vitesse de rotation de ses rotors égale à 40 tours par minute , la détermination du couple étant effectuée après 20 minutes de maintien à 200° C. Des valeurs appropriées de la viscosité à l'état fondu pour l'additif choc correspondent à des valeurs du couple précité comprises entre 600 et 4000 m.g. Dans le cas de compositions de résines pour lesquelles le polymère thermoplastique est un polymère renfermant au moins 80 % en poids de chlorure de vinyle polymérisé, des valeurs préférées de viscosité à l'état fondu pour l'additif choc correspondent à des valeurs dudit couple allant de 800 à 3000 m.g. et tout particulièrement de 1000 à 2500 m.g.

L'invention a également pour objet un procédé d'obtention dudit additif choc.

Un procédé consiste à réaliser dans une première étape un noyau réticulé élastomérique constitué d'un coeur et d'une enveloppe puis dans une seconde étape on procède au greffage d'une coquille en polyméthacrylate d'alkyle sur ledit noyau réticulé élastomérique obtenu dans la première étape.

Selon un mode préféré, on prépare le noyau réticulé, constitué d'un coeur et d'une enveloppe et on effectue l'opération de greffage en faisant appel à des techniques de polymérisation en émulsion. Dans ce cas, on peut utiliser le mode opératoire suivant.

Dans une première étape, on prépare une émulsion renfermant par partie en poids de monomères à polymériser, 1 à 10 parties d'eau, 0,001 à 0,03 parties d'un agent émulsifiant, une partie majeure de l'acrylate de n-alkyle ou du mélange d'acrylates d'alkyle tel que défini précedemment à polymériser pour constituer ledit noyau et au moins un agent réticulant polyfonctionnel. Le milieu réactionnel ainsi formé est agité et maintenu à température allant de 55° C à 65° C; et de préférence à une température voisine de 60° C. Ensuite, on ajoute 0,001 à 0,5 partie d'un catalyseur générateur de radicaux libres et on maintient le milieu réactionnel ainsi formé à une température comprise par exemple, entre la température ambiante et 100° C, et sous agitation pendant une durée suffisante pour obtenir une conversion pratiquement complète des monomères. Ensuite, à la phase ainsi obtenue, on ajoute simultanément la partie mineure d'acrylate de n-alkyle ou du mélange d'acrylates d'alkyle et l'agent de greffage, ainsi qu'en même temps 0,001 à 0,005 partie d'un catalyseur générateur de radicaux libres.

Cette seconde opération de la première étape qui consiste à réaliser l'enveloppe est généralement effectuée à une température supérieure à celle utilisée pour la préparation du coeur. Cette température est au plus égale à 100° C et, de préférence, comprise entre 60° C et 90° C.

Dans une seconde étape, on effectue le greffage dudit noyau par un méthacrylate d'alkyle. Pour ce faire on ajoute une quantité appropriée dudit méthacrylate au milieu réactionnel issu de la première étape, pour obtenir un copolymère greffé renfermant la teneur désirée en chaînes greffées, ainsi que, le cas échéant, des quantités additionnelles d'agent émulsifiant et d'un catalyseur radicalaire comprises également dans les intervalles définis plus haut, et l'on maintient le milieu ainsi formé à une température comprise dans la gamme précitée, et sous agitation, jusqu'à obtenir une conversion pratiquement complète des monomères de greffage.

A titre d'agent émulsifiant, on peut utiliser l'un quelconque des agents tensio-actifs connus qu'ils soient anioniques, non ioniques ou même cationiques. En particulier, on peut choisir l'agent émulsifiant parmi les anioniques tels que sels de sodium ou de potassium d'acides gras, notamment le laurate de sodium, le stéarate de sodium, le palmitate de sodium, l'oléate de sodium, les sulfates mixtes de sodium ou de potassium et d'alcools gras, notamment le laurylsulfate de sodium, les sels de sodium ou de potassium d'esters sulfosucciniques, les sels de sodium ou de potassium des acides alkylarylsulfoniques, notamment le dodécylbenzène sulfonate de sodium, et sels de sodium ou de potassium de monosulfonates de monoglycérides gras, ou encore parmi les tensio-actifs non ioniques tels que les produits de réaction de l'oxyde d'éthylène et d'alkylphénol ou d'alcools aliphatiques, alkylphénols. On peut encore utiliser des mélanges de tels agents tensio-actifs si besoin est.

Les catalyseurs susceptibles d'être employés tant dans la première que dans la seconde étape précitées de polymérisation en émulsion sont des composés donnant naissance à des radicaux libres dans les conditions de température choisies pour la polymérisation. Ces composés peuvent être notamment des composés peroxydés comme l'eau oxygénée ; les persulfates des métaux alcalin et notamment le persulfate de sodium ou de potassium, le persulfate d'ammonium ; les percarbonates ; les peracétates ; les perborates ; les peroxydes tels que le peroxyde de benzoyle, le peroxyde de lauroyle ; les hydroperoxydes tels que l'hydroperoxyde de cumène, l'hydroperoxyde de diisopropylbenzène, l'hydroperoxyde de paramenthane, l'hydroperoxyde de tertiobutyle.

On utilise toutefois de préférence des systèmes catalytiques de type redox formés par l'association d'un composé péroxydé, par exemple tel que précité, avec un agent réducteur notamment tel que sulfite de métal alcalin, bisulfite de métal alcalin, sulfoxylate formaldehyde de sodium (NaHSO₂, HCHO), acide ascorbique, glucose et en particulier ceux desdits systèmes catalytiques qui sont hydrosolubles, par exemple, persulfate de potassium/métabisulfite de sodium ou encore hydroperoxyde de diisopropylbenzène/sulfoxylate formaldéhyde de sodium.

On peut encore ajouter au milieu de polymérisation de l'une et/ou l'autre des étapes, des composés limiteurs de chaînes, et notamment des mercaptans tels que le tertio-dodécylmercaptan, l'isobutylmercaptan, le n-octylmercaptan, le n-dodécylmercaptan, l'isooctylmercaptopropionate dans le but de contrôler la masse moléculaire du noyau et/ou des chaînes greffées sur le coeur, ou encore des composés tels que des phosphates en vue de contrôler la force ionique du milieu de polymérisation.

Le milieu réactionnel obtenu à l'issue de la seconde étape de polymérisation en émulsion, qui est constitué d'un émulsion aqueuse de l'additif selon l'invention, est ensuite traité pour en séparer ledit additif. Pour ce faire, on peut par exemple soumettre l'émulsion en fonction du tensio-actif utilisé à un traitement de coagulation par mise en contact avec une solution salée (CaCl₂, AlCl₃) ou acidifiée par de l'acide sulfurique concentré, puis séparer par filtration le produit solide résultant de la coagulation, ledit produit solide étant ensuite lavé et séché pour donner une poudre du copolymère gréffé. On peut encore récupérer l'additif contenu dans l'émulsion en faisant appel à une technique de séchage par pulvérisation.

L'additif résultant se présente sous la forme d'une poudre, dont la granulométrie peut aller de quelques microns, par exemple 0,05 à 5 microns(µm), jusqu'à 200 à 300 microns, ladite granulométrie dépendant de la technique utilisée pour séparer le copolymère gréffé du milieu de polymérisation en émulsion.

La composition suivant l'invention peut être préparée par toute méthode permettant de réaliser un mélange homogène renfermant un polymère thermoplastique, l'additif choc selon l'invention et éventuellement d'autres additifs. On peut par exemple mélanger à sec les ingrédients constituant la composition, puis extruder le mélange résultant et réduire l'extrudat en pastilles. Lorsque le polymère thermoplastique est obtenu par polymérisation en émulsion, il peut être commode de mélanger l'émulsion contenant l'additif selon l'invention à l'émulsion du polymère thermoplastique et de traiter l'émulsion résultante pour en séparer le produit solide qu'elle renferme comme décrit plus haut à propos de la séparation de l'additif.

Les additifs, autres que l'additif choc, qui peuvent être éventuellement présents dans les compositions suivant l'invention, sont notamment pigments, colorants, plastifiants, antioxydants, stabilisants à la chaleur, additifs facilitant la mise en oeuvre, lubrifiants.

La composition de PVC obtenue selon la présente invention présente une excellente résistance au choc à température ambiante ainsi qu'à des températures aussi basses que -30° C, voir -40° C.

La composition de la présente invention peut être avantageusement utilisée pour réaliser des profilés ou des bardages utilisés notamment dans le bâtiment ou bien encore pour réaliser des tubes utilisables pour le transport de l'eau.

Les exemples qui suivent illustrent l'invention.

### Exemple 1 (conforme à l'invention)

On opère dans un réacteur de 2 litres équipé d'un dispositif d'agitation, d'une prise de température et muni d'une double enveloppe parcourue par un fluide caloporteur pour le maintien du réacteur en température.

### 1/ Préparation du noyau élastomérique réticulé de l'additif choc:

Dans le réacteur précédemment décrit, maintenu à la température ambiante et sous agitation, on introduit, après avoir effectué un dégazage à l'azote, 800 g d'eau déminéralisée et 2,46 g de phosphate disodique, puis on dissout dans ce milieu 20,58 g de laurylsulfate de sodium à titre d'agent émulsifiant.

On porte ensuite la température du contenu du réacteur à 57°C et, tout en maintenant cette température, on ajoute alors simultanément audit contenu 423 g d'acrylate de n-octyle, et 5,08 g de diacrylate de butanediol - 1,4.

On amène la température du réacteur à 63°C et on ajoute ensuite au milieu réactionnel 0,41 g de metabisulfite de sodium dans 5,59 ml d'eau et 0,62 g de persulfate de potassium dans 6,58 ml d'eau, à titre de système catalytique. On laisse ensuite la réaction se poursuivre pendant 2 heures, puis la température du réacteur est portée à 80°C et on ajoute alors simultanément 47 g d'acrylate de n-octyle, 2,36 g de maleate de diallyle et 0,8 g de persulfate de potassium.

La température du réacteur est maintenue à 80°C pendant 1 heure. On obtient, avec une conversion de 98 % un noyau élastomérique réticulé constitué de
*1*/ 89,66 % en poids d'un coeur consistant en un copolymère (I) d'acrylate de n-octyle/diacrylate de butanediol-1,4 et de
*2*/ 10,34 % en poids d'une enveloppe consistant en un copolymère (Il) d'acrylate de n-octyle/maléate de diallyle.

Ce noyau renferme en mole 1 % de diacrylate de butane diol-1,4 et 0,47 % de maléate de diallyle.

### 2/ Greffage du méthacrylate de méthyle sur le noyau elastomérique réticulé:

Au milieu réactionnel précédemment obtenu, maintenu à 80°C, on ajoute, sous agitation, 118 g de méthacrylate de méthyle en continu, en une heure. On ajoute également dans le même temps 1,7 g de diisopropylbenzene hydroperoxyde dans 78 ml d'eau et 0,2 g de sulfoxylate formaldehyde de sodium dans 4 ml d'eau.

Le contenu du réacteur est maintenu à 80°C pendant 1,5 heures, après le début de l'introduction du méthacrylate de méthyle et on ajoute audit contenu 0,31 g d'hydroperoxyde de tertiobutyle et 0,8 g de metabisulfite de sodium dans 15 ml d'eau. Le milieu réactionnel est ensuite maintenu à 80°C pendant une heure. Au bout de cette durée, le contenu du réacteur est refroidi à température ambiante et le latex du copolymère greffé produit, dont le diamètre moyen de particule est de 0,08 µm, est coagulé dans une solution salée, acidifiée par de l'acide sulfurique concentré. Le produit coagulé est ensuite filtré, lavé puis séché pour donner une poudre constituant l'additif choc.

La conversion du méthacrylate de méthyle au cours du greffage est de 99 %. L'additif choc renferme une proportion de chaînes greffées de polyméthacrylate de méthyle représentant 19,82 % en poids de l'additif et possède une viscosité à l'état fondu correspondant à une valeur égale à 1400 m.g. du couple du rhéomètre Brabender opérant dans les conditions définies précédemment.

### Exemple 2 (conforme à l'invention)

### 1/ Préparation du noyau élastomérique réticulé de l'additif choc:

Dans un réacteur de 5 litres équipé comme décrit dans l'exemple 1, maintenu à la température ambiante et sous agitation, on introduit, après avoir effectué un dégazage à l'azote, 2000 g d'eau déminéralisée et 5,85 g de phosphate disodique, puis on dissout dans ce milieu 245 g de laurylsulfate de sodium à titre d'agent émulsifiant.

On porte ensuite la température du contenu du réacteur à 57°C et, tout en maintenant cette température, on ajoute alors simultanément audit contenu 904,5 g d'acrylate de n-octyle, 301,5 g d'acrylate de n-butyle et 14,4 g de diacrylate de butanediol -1,4.

On amène la température du réacteur à 63°C et on ajoute ensuite au milieu réactionnel 22,6 g de bisulfite de sodium dans 10 ml d'eau et 1,60 g de persulfate de potassium dans 33,83 ml d'eau, à titre de système catalytique. On laisse ensuite la réaction se poursuivre de manière adiabatique pendant 2 heures, puis la température du réacteur est portée à 80°C et on ajoute alors simultanément 100,5 g d'acrylate de n-octyle, 33,5 g d'acrylate de n-butyle, 6,71 g de maleate de diallyle et 0,17 g de persulfate de potassium dans 3,73 ml d'eau.

La température du réacteur est maintenue à 80° C pendant 1 heure.

On obtient avec une conversion de 95,72 % un noyau élastomérique réticulé constitué de:
*1*/ 89,66 % en poids d'un coeur consistant en un copolymère (I) d'acrylate de n-octyle/acrylate de n-butyle/diacrylate de butanediol-1,4 et de
*2*/ 10,34 % en poids d'une enveloppe consistant en un copolymère (Il) d'acrylate de n-octyle/acrylate de n-butyle/maléate de dialkyle.

### 2/ Greffage du méthacrylate de méthyle sur le noyau elastomérique réticulé:

Au milieu réactionnel précédemment obtenu, maintenu à 80°C, on ajoute, sous agitation, 335,3 g de méthacrylate de méthyle en continu, en une heure. On ajoute également dans le même temps 4,3 g de diisopropylbenzene hydroperoxyde dans 195,7 ml d'eau et 0,40 g de sulfoxylate formaldehyde de sodium dans 9,28 ml d'eau.

Le contenu du réacteur est maintenu à 80°C pendant 1,5 heures, après le début de l'introduction du methacrylate de méthyle et on ajoute audit contenu 0,24 g d'hydroperoxyde de tertiobutyle et 4,6 g de bisulfite de sodium dans 17 ml d'eau. Le milieu réactionnel est ensuite maintenu à 80° pendant une heure. Au bout de cette durée, le contenu du réacteur est refroidi à température ambiante et le latex du copolymère greffé produit, est coagulé dans une solution salée, acidifiée par de l'acide sulfurique concentré. Le produit coagulé est ensuite filtré, lavé puis séché pour donner une poudre constituant l'additif choc.

La conversion du methacrylate de méthyle au cours du greffage est de 98,27 %. L'additif choc renferme une proportion de chaînes greffées de polymethacrylate de méthyle représentant 19,77% en poids de l'additif et possède une viscosité à l'état fondu correspondant à une valeur égale à 1500 m.g. du couple du rhéomètre Brabender opérant dans les conditions définies précédemment.

Dans les exemples 3 à 7, on opère selon les mêmes conditions opératoires de l'exemple 1, en utilisant, pour le noyau élastomérique réticulé comme pour la coquille gréffée sur ledit noyau les mêmes réactifs (agents de greffage et de réticulation, catalyseurs, émulsifiant) en des quantités pondérales identiques excepté que pour la préparation du noyau élastomérique réticulé on utilise des quantités pondérales identiques d'un acrylate d'alkyle autre que l'acrylate de n-octyle pour réaliser les copolymères (I) et (II).

Dans l'**exemple 3**, on utilise l'acrylate de n-heptyle.

Dans l'**exemple 4**, on utilise l'acrylate de n-hexyle.

Dans l'**exemple 5**, on utilise l'acrylate de n-pentyle.

Dans l'**exemple 6** (non-conforme à l'invention), on utilise l'acrylate de n-butyle.

Dans l'**exemple 7** (non-conforme à l'invention), on utilise l'acrylate de 2-éthylhéxyle.

On obtient des additifs choc comportant comme dans l'exemple 1 un noyau élastomérique réticulé, obtenu avec des rendements supérieurs à 98 %, constitué de :
1/ environ 90 % en poids d'un coeur consistant en un copolymère (I) d'acrylate d'alkyle/diacrylate de butane diol-1,4, et de
2/ environ 10 % en poids d'une enveloppe consistant en un copolymère (II) d'un acrylate d'alkyle identique à celui utilisé en 1/ maléate de dialkyle,
et une coquille, en polyméthacrylate de methyle, gréffée sur ledit noyau et représentant environ 20 % en poids de l'additif choc.

### Exemple 8 (conforme à l'invention)

### 1/ Préparation du noyau élastomérique réticulé de l'additif choc:

Dans le réacteur décrit dans l'exemple 1 maintenu à la température ambiante et sous agitation, on introduit, après avoir effectué un dégazage à l'azote, 750 g d'eau déminéralisée, 2,46 g de phosphate disodique et 0,41 g de métabisulfite de sodium dans 7,59 ml d'eau puis on dissout dans ce milieu 100 g de laurylsulfate de sodium à titre d'agent émulsifiant.

On porte ensuite la température du contenu du réacteur à 57° C et, tout en maintenant cette température, on ajoute alors simultanément audit contenu 117,5 g d'acrylate de n-octyle et 1,21 g de méthacrylate d'allyle.

On amène la température du réacteur à 63° C et on ajoute ensuite au milieu réactionnel 0,13 g de persulfate de potassium dans 2,67 ml d'eau. On laisse ensuite la réaction se poursuivre pendant 45 minutes, puis la température du réacteur est portée à 80° C et on ajoute alors simultanément 353 g d'acrylate de n-butyle, 5,21 g de méthacrylate d'allyle, 0,5 g de persulfate de potassium dans 10,7 ml d'eau.

La température du réacteur est maintenue à 80° C pendant 1 heure.

On obtient avec une conversion de 99,9 % un noyau élastomérique réticulé constitué de
1/ 24,89 % en poids d'un coeur consistant en un copolymère (I) d'acrylate de n-octyle/méthacrylate d'allyle et de
2/ 75,11 % en poids d'une enveloppe consistant en un copolymère (I) d'acrylate de n-butyle/méthacrylate d'allyle.

### 2/ Greffage du méthacrylate de méthyle sur le noyau elastomérique réticulé :

Au milieu réactionnel précédemment obtenu, maintenu à 80°C, on ajoute, sous agitation, 118 g de méthacrylate de méthyle en continu, en une heure. On ajoute également dans le même temps 1,7 g de diisopropylbenzene hydroperoxyde dans 78 ml d'eau et 0,42 g de sulfoxylate formaldehyde de sodium dans 9,58 ml d'eau.

Le contenu du réacteur est maintenu à 80°C pendant 1,5 heures, après le début de l'introduction du méthacrylate de méthyle et on ajoute audit contenu 0,33 g d'hydroperoxyde de tertiobutyle et 0,08 g de metabisulfite de sodium dans 10 ml d'eau. Le milieu réactionnel est ensuite maintenu à 80°C pendant une heure. Au bout de cette durée, le contenu du réacteur est refroidi à température ambiante et le latex du copolymère greffé produit est coagulé dans une solution salée, acidifiée par de l'acide sulfurique concentré. Le produit coagulé est ensuite filtré, lavé puis séché pour donner une poudre constituant l'additif choc.

La conversion du méthacrylate de méthyle au cours du greffage est quantitatif. L'additif choc renferme une proportion de chaînes greffées de polymethacrylate de méthyle représentant 19,83% en poids de l'additif et possède une viscosité à l'état fondu correspondant à une valeur égale à 1760 m.g. du couple du rhéomètre Brabender opérant dans les conditions définies précédemment.

### Exemple 10 :

### 1. Préparation du noyau élastomérique réticulé de l'additif choc.

### Première étape : Préparation de la semence.

On opère dans un réacteur de 5 litres équipé d'un agitateur, d'une prise de température et d'une double enveloppe parcourue par un fluide caloporteur pour le maintien du réacteur en température.

Dans ce réacteur, maintenu à température ambiante, et sous agitation, on introduit, après avoir effectué un dégazage à l'azote, 1100 g d'eau déminéralisée et 0,95 g d'hydrogéno carbonate de sodium dans 95 g d'eau, puis on dissout dans ce milieu 4,76 g de sulfosuccinate dioctyle de sodium à titre d'agent émulsifiant.

On porte ensuite la température du contenu du réacteur à 57°C et, tout en maintenant cette température, on ajoute alors simultanément audit contenu 119 g d'acrylate de n-octyle et 2,56 g de diacrylate de butanediol-1,4.

On amène la température du réacteur à 70°C et on ajoute au milieu réactionnel 2,62 g de persulfate de potassium dissout dans 65 g d'eau.

Après un temps d'induction d'environ 10 minutes, la température s'élève à 76°C. On ajoute alors dans le réacteur sur une période de deux heures un mélange émulsifié constitué de 663 g d'eau déminéralisée, 0,66 g d'hydrogéno carbonate de sodium dans 66 g d'eau, 6,43 g de sulfosuccinate dioctyle de sodium à titre d'agent émulsifiant, 1071 g d'acrylate de n-octyle et 23,05 g de diacrylate de butanediol-1,4. La température est maintenue à 70°C pendant la période d'addition. La température est ensuite augmentée jusqu'à 90°C et maintenue pendant une heure.

On obtient, avec une conversion de 99 %, une semence élastomérique réticulée désignée émulsion (A), constitué de particules de latex de diamètre 0,130 µm.

### Deuxième étape : Préparation du noyau.

On opère dans un réacteur de 5 litres équipé d'un agitateur, d'une prise de température et d'une double-enveloppe parcourue par un fluide caloporteur pour le maintien du réacteur en température.

On prépare un pré-mélange émulsifié (B) constitué de 660 g d'eau déminéralisée, 0,66 g d'hydrogéno carbonate de sodium dans 66 g d'eau, 6,43 g de sulfosuccinate dioctyle de sodium à titre d'agent émulsifiant, 1071 g d'acrylate de n-octyle et 23,05 g de diacrylate de butanediol-1,4.

Le réacteur étant maintenu à température ambiante, et sous agitation, on introduit, après avoir effectué un dégazage à l'azote, 1000 g d'eau déminéralisée et 1 g d'hydrogéno carbonate de sodium dans 100 g d'eau, puis on dissout dans ce milieu 338,88 g de l'émulsion (A) obtenue lors de la première étape.

On porte ensuite la température du contenu du réacteur à 57°C et, tout en maintenant cette température, on ajoute alors 120 g du pré-mélange (B).

On amène la température du réacteur à 70°C et on ajoute au milieu réactionnel 2,14 g de persulfate de potassium dissout dans 65 g d'eau.

Après un temps d'induction d'environ 10 minutes, la température s'élève à 76°C. On ajoute alors dans le réacteur sur une période de 110 minutes 1505 g du pré-mélange (B). On ajoute alors 5,95 g de maléate de diallyle aux 200 g de pré-mélange (B) restant, et on ajoute l'ensemble au contenu du réacteur, toujours en maintenant la température à 70°C, sur une période de 10 minutes.

La température est ensuite augmentée jusqu'à 90°C et maintenue pendant une heure.

On obtient, avec une conversion de 99 % le noyau élastomérique constitué de particules de latex de diamètre Coulter 0,270 µm.

### 2. Greffage du méthacrylate de méthyle sur le noyau élastomérique réticulé.

Au milieu réactionnel précédemment obtenu, maintenu à 70°C, on ajoute, sous agitation, 0,54 g de persulfate de potassium dissout dans 30 g d'eau. On ajoute alors en continu, sur 45 minutes, un mélange émulsifié (C) composé de 200 g d'eau déminéralisée, 0,35 g d'hydrogéno carbonate de sodium dans 35 g d'eau, 1,34 g de sulfosuccinate dioctyle de sodium à titre d'agent émulsifiant, 267 g de méthacrylate de méthyle et 29,75 g d'acrylate d'éthyle.

Au terme de cette addition, on maintient le contenu du réacteur à 90°C pendant une heure. Au bout de cette durée, le contenu du réacteur est refroidi à température ambiante.

On obtient, avec une conversion de 98,3 % un latex du copolymère greffé, dont le diamètre moyen de particule est 0,285 µm.

Ce latex est ensuite coagulé dans une solution de chlorure de calcium. Le produit coagulé est ensuite filtré, lavé, puis séché pour donner une poudre qui constitue l'additif choc.

Cet additif possède une viscosité à l'état fondu correspondant à une valeur égale à 890 m.g. du couple rhéomètre Brabender opérant dans les conditions définies précédemment.

**Exemple 11** (non conforme à l'invention), on opère selon les mêmes conditions opératoires que l'exemple 10, en utilisant pour la préparation de la semence, du noyau élastomérique réticulé, comme pour la coquille greffée sur ledit noyau les mêmes réactifs (agents de greffage et de réticulation, catalyseurs, émulsifiants) en des quantités pondérales identiques excepté que pour la préparation de la semence et du noyau élastomérique réticulé on utilise une quantité pondérale identique d'acrylate de 2-éthylhexyle au lieu de l'acrylate de n-octyle.

On obtient avec une conversion de 99,1 % un latex du copolymère greffé, dont le diamètre moyen de particule est 0,315 µm.

Ce latex est ensuite coagulé dans une solution de chlorure de calcium. Le produit coagulé est ensuite filtré, lavé puis séché pour donner une poudre qui constitue l'additif choc.

Cet additif possède une viscosité à l'état fondu correspondant à une valeur égale à 880 m.g. du couple rhéomètre Brabender opérant dans les conditions définies précédemment.

### Exemple 12 (non conforme à l'invention)

On opère selon les mêmes conditions opératoires que l'exemple 10, en utilisant pour la préparation de la semence, du noyau élastomérique réticulé, comme pour la coquille greffée sur ledit noyau les mêmes réactifs (agents de greffage et de réticulation, catalyseurs, émulsifiants) en des quantités pondérales identiques excepté que pour la préparation de la semence et du noyau élastomérique réticulé on utilise une quantité pondérale identique d'acrylate de butyle au lieu de l'acrylate de n-octyle et une quantité molaire par rapport au monomère acrylate de butyle identique de diacrylate de butanediol-1,4.

On obtient avec une conversion de 98,6 % un latex du copolymère greffé, dont le diamètre moyen de particule est 0,335 µm.

Ce latex est ensuite coagulé dans une solution de chlorure de calcium. Le produit coagulé est ensuite filtré, lavé puis séché pour donner une poudre qui constitue l'additif choc.

Cet additif possède une viscosité à l'état fondu correspondant à une valeur égale à 1725 m.g. du couple rhéomètre Brabender opérant dans les conditions définies précédemment.

### Préparation et caractéristiques des compositions selon l'invention:

**1.** On décrit ci-après la préparation d'une composition à base de PVC et on donne les caractéristiques de résistance au choc d'éprouvettes façonnées à partir de cette composition de résine.
Dans un mélangeur du type PAPENMEIR, on prépare à 25° C une composition contenant (parties en poids):
- 100 parties d'un homopolymère du chlorure de vinyle de KW = 67,
- 2,5 parties de phosphite de plomb,
- 1,5 parties de stéarate de calcium,
- 6 parties de carbonate de calcium,
- 4 parties de TiO₂,
- 1 partie d'un "processing aid" (Metablen P550 commercialisé par la société Metablen B.V.),
- 0,2 partie acide 12 stéarique,
- 0,3 partie de Loxiol G60 (lubrifiant interne),
- 4 parties de cires de polyéthylène (lubrifiant externe) et,
- x parties d'un additif choc préparé selon l'un des exemples 1 à 8.

A partir de la composition ainsi obtenue, on réalise des éprouvettes pour effectuer les essais de détermination de résistance au choc.
Pour préparer les éprouvettes pour les essais au Choc CHARPY, les compositions de PVC résultant des mélanges des ingrédients précités sont calandrées à 175° C pendant 6 minutes sur une calandreuse du type SCHWANBENTHAN, puis moulées à 190° C sur une presse DERRAGON, pendant 5 minutes sous une pression de 200 bars, sous la forme de plaques, le refroidissement desdites plaques ayant lieu sous presse.
Les éprouvettes sont découpées au moyen d'une scie circulaire puis d'une entailleuse pour les essais de Choc CHARPY entaillé suivant la norme BS 2782.
L'épaisseur des éprouvettes, dont la forme est celle prescrite par la norme précitée est de 2,5 mm.
Pour préparer les éprouvettes pour l'essai de résistance au choc à basse température selon la norme ISO 6603.2 1989 (F) , la composition définie plus haut est malaxée dans une extrudeuse double vis du type KRAUSS-MAFFEI KMD 25, puis introduite dans une filière qui permet l'obtention de bande d'épaisseur 1 mm et ensuite découpée en carré de 7 cm x 7 cm.
Les résultats sont rassemblés dans les tableaux ci-après.
Dans le tableau 1, on a indiqué dans la colonne "additif choc" la provenance de l'additif choc (exemple) et sa teneur dans la composition de PVC telle que décrite précédemment en parties en poids pour 100 parties en poids de ladite résine (phr). Les essais de résistance au "choc Charpy" sont effectués selon la norme BS 2782 à la température de 23 ±1 ° C. L'énergie de casse est calculée en faisant la moyenne des énergies de casse ductile et fragile.
Dans le tableau 2, on reporte les essais de résistance au choc basse température. Comme dans le tableau 1 dans la colonne "additif choc", nous avons indiqué la provenance dudit additif choc et sa teneur (phr) dans la composition de PVC.
Dans les tableaux 1 et 2, les compositions 9(c), 10(c), 11(c), 12(c), 21(c) et 22(c) sont non conformes à l'invention.
**2.** On décrit ci-après la préparation d'une composition à base de polybutylène téréphtalate (PBT) et on donne les caractéristiques de résistance au choc d'éprouvettes façonnées à partir de cette composittion.
On prépare à 25°C une composition selon l'invention contenant (parties en poids):
- 80 parties d'un homopolymère de polybutylène téréphthalate (Celanex 1700A commercialisé par la société Hoechst Celanese).
- 20 parties d'un additif choc préparé selon l'un des exemples 10 à 12.

On sèche le mélange pendant au moins 10 heures, sous un vide de 1 bar, à 80°C.
Ce mélange est homogénéisé par extrusion sur un Ko Malaxeur Buss PR46 suivi par la granulation du jonc obtenu. les conditions d'extrusion sont les suivantes :

| | | |
|---|---|---|
| KO Malaxeur - | température de la vis | 230°C |
| | température zone 1 | 260°C |
| | température zone 2 | 250°C |
| | vitesse | 120 tours/minute |
| Extrudeuse - | température de la vis | 240°C |
| | température zone 1 | 240°C |
| | filière | 230°C |
| | vitesse | 94 tours/minute |

Les éprouvettes pour les essais au Choc IZOD sont préparés par injection moulage sur une presse à injection VISUMAT 5000 des granulés obtenus précédemment. Ces granulés sont séchés pendant au moins 10 heures, sous un vide de 1 bar, à 80°C. L'injection est réalisée dans les conditions suivantes :

| | |
|---|---|
| Température d'injection | 240°C |
| Vitesse d'injection | 10 % |
| Pression d'injection | 80 bars |
| Pression de maintien | 50 bars |
| Temps de maintien | 20 secondes |

Ces éprouvettes, dont la forme et l'épaisseur sont celles prescrites par la norme ISO 180 sont ensuite entaillées.
Les résultats obtenus sont présentés dans le tableau 3 ci-après. Dans ce tableau 3, on a indiqué dans la colonne "additif choc" la provenance de l'additif choc (exemple). Dans la colonne "choc température ambiante", on a reporté l'énergie de casse selon la norme ISO 180 à la température de 23±1°C, calculée en faisant la moyenne sur dix éprouvettes des casses ductiles et fragiles. Dans la colonne "choc à froid", on a reporté l'énergie de casse selon la norme ISO 180 à la température de -20°C±1°C, calculée en faisant la moyenne sur dix éprouvettes des casses ductiles et fragiles.
**3.** On décrit ci-après la préparation d'une composition à base de poly(1-1-difluoroéthylène) (PVDF) et on donne les caractéristiques de résistance au choc d'éprouvettes façonnées à partir de cette composition de résine.
On prépare à 25°C une composition selon l'invention contenant (parties en poids) :
- 95 parties de poly(1,1-difluoroéthylène) (KYNAR 1000, commercialisé par la société Elf Atochem S.A.),
- 5 parties d'un additif choc préparé selon les exemples 10 et 11.

Ce mélange est homogénéisé par extrusion sur une Werner 40 bivis suivi par la granulation du jonc obtenu. Les conditions d'extrusion sont les suivantes :
- température zone 1 : 195°C
- température zone 2 : 230°C
- température zone 3 : 215°C
- température zone 4 : 240°C

Les éprouvettes pour les essais au Choc IZOD et Charpy sont préparés par injection moulage sur une presse à injection VISUMAT 5000 des granulés obtenus précédemment sous la forme de plaques 100mmx100mm.
Les éprouvettes, dont la forme et l'épaisseur sont celles prescrites par les normes ISO 179 et ISO 180 sont découpées à l'emporte pièce.
Les résultats obtenus sont présentés dans le tableau 4 ci-après. Dans ce tableau 4, on a indiqué dans la colonne "additif choc" la provenance de l'additif choc (exemple). Dans la colonne "choc température ambiante, IZOD", on a reporté l'énergie de casse selon la norme ISO 180 à la température de 23°C±1°C, calculée en faisant la moyenne sur dix éprouvettes des casses ductiles et fragiles. Dans la colonne "choc température ambiante, Charpy", on a reporté l'énergie de casse selon la norme ISO 179 à la température de 23°C±1°C, calculée en faisant la moyenne sur dix éprouvettes des casses ductiles et fragiles; Dans la colonne "choc à froid, Charpy", on a reporté l'énergie de casse selon la norme ISO 179 à la température de -40°C±1°C, calculée en faisant la moyenne sur dix éprouvettes des cases et fragiles.

**TABLEAU 1**

| | **ADDITIF CHOC** | | **CHOC CHARPY** | |
|---|---|---|---|---|
| **COMPOSITION** | **Provenance (exemple)** | **Teneur (phr)** | **Energie de casse (kJ/m**^{**2**}**)** | **% de Casse DUCTILE** |
| 1 | 1 | 7 | 34,2 | 60 |
| 2 | 1 | 7,5 | >52 | 100 |
| 3 | 3 | 7 | 48 | 100 |
| 4 | 3 | 7,5 | > 52 | 100 |
| 5 | 4 | 7 | 46,5 | 100 |
| 6 | 4 | 7,5 | > 52 | 100 |
| 7 | 2 | 7 | 43,1 | 80 |
| 8 | 2 | 8 | 52 | 100 |
| 9(c) | 6 | 7 | 15,7 | 0 |
| 10(c) | 6 | 8 | 48,6 | 90 |
| 11(c) | 7 | 7 | 12,4 | 0 |
| 12(c) | 7 | 7,5 | 39 | 70 |
| 13 | 8 | 7 | 15,2 | 0 |
| 14 | 8 | 7,5 | >51 | 100 |

**TABLEAU 2**

| | **ADDITIF CHOC** | | **CHOC A BASSE TEMPERATURE** | |
|---|---|---|---|---|
| **COMPOSITION** | **Provenance (exemple)** | **Teneur (phr)** | **Température de l'essai (en ° C)** | **Energie de Casse (en KJ/m**^{**2**}**)** |
| 17 | 1 | 6 | -10 | 23,1 |
| | | | -20 | 19,5 |
| | | | -30 | 11,5 |
| | | | - 40 | 9,1 |
| 18 | 3 | 6 | -10 | 22,6 |
| | | | -20 | 20,8 |
| | | | -30 | 5 |
| | | | -40 | - |
| 19 | 4 | 6 | -10 | 25,6 |
| | | | -20 | 19,6 |
| | | | -30 | 8,2 |
| | | | - 40 | 2,4 |
| 20 | 5 | 6 | -10 | 25,9 |
| | | | -20 | 19,3 |
| | | | -30 | 7,6 |
| | | | -40 | 4,6 |
| 21(c) | 7 | 6 | -10 | 18 |
| | | | -20 | 17 |
| | | | -30 | 5,4 |
| | | | - 40 | 2,5 |
| 22(c) | 6 | 6 | -10 | 22 |
| | | | -20 | 15 |
| | | | -30 | 5,1 |
| | | | -40 | 2,1 |

**TABLEAU 3**

| **ADDITIF CHOC** | **CHOC A TEMPERATURE AMBIANTE (kJ/m**^{**2**}**)** | **CHOC A FROID (kJ/m**^{**2**}**)** |
|---|---|---|
| PBT ^{*} | 69,3 | 11,3 |
| Exemple 10 | 62 | 16,1 |
| Exemple 11 | 56,8 | 8,4 |
| Exemple 12 | 74 | 8,8 |

| | | |
|---|---|---|
| * COMPOSITION A BASE DE PBT (SANS ADDITIF CHOC) | | |

**TABLEAU 4**

| **ADDITIF CHOC** | **CHOC TEMPERATURE AMBIANTE IZOD (kJ/m**^{**2**}**)** | **CHOC TEMPERATURE AMBIANTE CHARPY (kJ/m**^{**2**}**)** | **CHOC A FROID, CHARPY (kJ/m**^{**2**}**)** |
|---|---|---|---|
| PVDF ^{*} | 7,5 | 8 | 3,7 |
| Exemple 10 | 62,8 | 78,2 | 15,6 |
| Exemple 11 | 49,3 | 60,3 | 11,1 |

| | | | |
|---|---|---|---|
| * COMPOSITION A BASE DE PVDF (SANS ADDITIF CHOC) | | | |

## Revendications

1. Additif choc du type noyau/coquille consistant en un noyau à base d'acrylate d'alkyle et une coquille à base de polyméthacrylate d'alkyle, **caractérisé en ce que** ledit additif choc comprend de:
a) 70 % à 90 % en poids d'un noyau réticulé élastomérique qui se compose:
1) de 20 % à 90 % en poids et, de de 20 % à 90 % en poids d'un coeur consistant en un copolymère (I) d'acrylate de n-alkyle dont le groupe alkyle a un nombre de carbone allant de 5 à 12 ou d'un mélange d'acrylates d'alkyle dont le groupe alkyle, linéaire ou ramifié, a un nombre de carbone allant de 2 à 12 d'un agent réticulant polyfonctionnel possédant dans sa molécule des groupements insaturés dont au moins un est de type vinylique CH₂=C<, et, éventuellement d'un agent de greffage polyfonctionnel possédant dans sa molécule des groupements insaturés dont au moins un est de type allylique CH₂=CH-CH₂-, ledit coeur renfermant une quantité molaire d'agent réticulant et, éventuellement d'agent de greffage allant de 0,05 % à 5 %,
2) de 80 % à 10 % en poids d'une enveloppe consistant en un copolymère (Il) d'acrylate de n-alkyle dont le groupe alkyle a un nombre de carbone allant de 4 à 12 ou d'un mélange d'acrylates d'alkyle tels que définis précédemment en 1) et d'un agent de greffage polyfonctionnel possédant dans sa molécule des groupements insaturés dont au moins un est de type allylique CH₂=CH-CH₂-, ladite enveloppe renfermant une quantité molaire d'agent de greffage allant de 0,05 % à 2,5 %,
b/ 30 % à 10 % en poids d'une coquille greffée sur ledit noyau constituée par un polymère d'un méthacrylate d'alkyle dont le groupe alkyle a un nombre de carbone allant de 1 à 4 ou bien par un copolymère statistique d'un méthacrylate d'alkyle dont le groupe alkyle un nombre de carbone allant de 1 à 4 et d'un acrylate d'alkyle dont le groupe alkyle a un nombre de carbone allant de 1 à 8, renfermant une quantité molaire d'acrylate d'alkyle allant de 5 % à 40 %.

2. Additif choc selon la revendication 1, **caractérisé en ce que** ledit additif choc comprend de:
a) 75 % à 85 % d'un noyau réticulé élastomérique,
b) 25 % à 15 % d'une coquille greffée sur ledit noyau.

3. Additif choc selon l'une des revendications 1 et 2, **caractérisé en ce que** le groupe alkyle de l'acrylate de n-alkyle du copolymère (I) a un nombre de carbone allant de 5 à 8 et que le groupe alkyle de l'acrylate de n-alkyle du copolymère (Il) a un nombre de carbone allant de 4 à 8.

4. Additif choc selon l'une des revendications 1 à 3, **caractérisé en ce que** le groupe alkyle des acrylates d'alkyle du mélange entrant dans les copolymères (I) et/ou (Il) a un nombre de carbone allant de 4 à 8.

5. Additif choc selon la revendication 1, **caractérisé en ce que** l'agent réticulant est choisi parmi les dérivés possédant au moins deux doubles liaisons de type vinylique CH₂=C<.

6. Additif choc selon la revendication 1, **caractérisé en ce que** l'agent réticulant est choisi parmi les derivés possédant une ou plusieurs doubles liaisons de type vinylique et au moins une double liaison de type allylique CH₂=CH-CH₂-.

7. Additif choc selon l'une des revendications 1 et 5, **caractérisé en ce que** l'agent réticulant est le diacrylate de butanediol-1,4.

8. Additif choc selon l'une des revendications 1 et 6, **caractérisé en ce que** l'agent réticulant est l'acrylate ou le méthacrylate d'allyle.

9. Additif choc selon la revendication 1, **caractérisé en ce que** l'agent de greffage est choisi parmi les dérivés possédant au moins deux double liaisons de type allylique CH₂=CH-CH₂-.

10. Additif choc selon la revendication 1, **caractérisé en ce que** l'agent de greffage est choisi parmi les dérivés possédant une ou plusieurs doubles liaisons de type allylique et au moins une double liaison de type vinylique.

11. Additif choc selon l'une des revendications 1 et 9, **caractérisé en ce que** l'agent de greffage est le maléate de diallyle.

12. Additif choc selon l'une des revendications 1 et 10, **caractérisé en ce que** l'agent de greffage est l'acrylate ou le méthacrylate d'allyle.

13. Additif choc selon l'une des revendications 1 à 12, **caractérisé en ce que** le coeur du noyau réticulé a une quantité molaire d'agent réticulant et, éventuellement d'agent de greffage comprise entre 0,5 % et 1,5 %.

14. Additif choc selon l'une des revendications 1 à 4 et 10 à 12, **caractérisé en ce que** l'enveloppe du noyau réticulé a une quantité molaire d'agent de greffage comprise entre 0,5 % et 1,5 %.

15. Additif choc selon l'une des revendication 1 à 4, **caractérisé en ce que** le copolymère statistique de la coquille a une quantité molaire d'acrylate d'alkyle comprise entre 10 % et 20 %.

16. Additif choc selon l'une des revendications 1 et 3, **caractérisé en ce que** les acrylates de n-alkyle utilisés pour former le copolymère (I) sont l'acrylate de n-pentyle, l'acrylate de n-hexyle, l'acrylate de n-heptyle, l'acrylate de n-octyle.

17. Additif choc selon l'une des revendications 1 à 3, **caractérisé en ce que** les acrylates de n-alkyle utilisés pour former le copolymère (Il) sont l'acrylate de n-butyle, l'acrylate de n-pentyle, l'acrylate de n-hexyle, l'acrylate de n-heptyle, l'acrylate de n-octyle.

18. Additif choc selon les revendications 16 et 17, **caractérisé en ce que** l'acrylate de n-alkyle pour former les copolymères (I) et (Il) est l'acrylate de n-pentyle.

19. Additif choc selon les revendications 16 et 17, **caractérisé en ce que** l'acrylate de n-alkyle pour former les copolymères (I) et (Il) est l'acrylate de n-hexyle.

20. Additif choc selon les revendications 16 et 17, **caractérisé en ce que** l'acrylate de n-alkyle pour former les copolymères (I) et (Il) est l'acrylate de n-heptyle.

21. Additif choc selon les revendications 16 et 17, **caractérisé en ce que** l'acrylate de n-alkyle pour former les copolymères (I) et (II) est l'acrylate de n-octyle.

22. Additif choc selon les revendications 16 et 17, **caractérisé en ce que** l'acrylate de n-alkyle pour former le copolymère (I) est l'acrylate de n-octyle et que l'acrylate de n-alkyle pour former le copolymère (Il) est l'acrylate de n-butyle.

23. Additif choc selon l'une des revendications 1 à 3, **caractérisé en ce que** les acrylates d'alkyle linéaires ou ramifiés constituant le mélange d'acrylates d'alkyle utilisés pour former les copolymères (I) et/ou (II) sont l'acrylate d'éthyle, l'acrylate de n-propyle, l'acrylate de n-butyle, l'acrylate d'amyle, l'acrylate de 2-méthylbutyle, l'acrylate de 2-éthylhexyl, l'acrylate de n-hexyle, l'acrylate de n-octyle, l'acrylate de n-décyle, l'acrylate de n-dodécyle, l'acrylate de triméthyl3,5,5-hexyle.

24. Additif choc selon la revendication 23, **caractérisé en ce que** l'on utilise une quantité pondérale d'acrylate de n-alkyle au moins égale à 10 % en poids du mélange d'acrylates d'alkyle.

25. Additif choc selon la revendication 24, **caractérisé en ce que** l'on utilise une quantité pondérale d'acrylate de n-alkyle comprise entre 20 % et 80 % en poids du mélange d'acrylates d'alkyle.

26. Additif choc selon l'une des revendications 23 à 25, **caractérisé en ce que** l'acrylate de n-alkyle est l'acrylate de n-octyle.

27. Additif choc selon la revendication 1 ou 2, **caractérisé en ce que** le méthacrylate d'alkyle utilisé pour constituer la coquille est le méthacrylate de méthyle.

28. Composition de polymère thermoplastique renfermant un additif choc selon l'une quelconque des revendications 1 à 27.

29. Composition selon la revendication 28, **caractérisée en ce que** le polymère thermoplastique consiste en un ou plusieurs polymères du type des polycondensats, notamment les polyesters tels que le polybutylène téréphtalate, les polyamides, les polyesteretheramides, les polycarbonates et les alliages des polymères précités.

30. Composition selon la revendication 28, **caractérisée en ce que** le polymère thermoplastique consiste en un ou plusieurs polymères choisis dans le groupe formé par les polyméthacrylates d'alkyle et, notamment le polyméthacrylate de méthyle ; les homopolymères du chlorure de vinyle éventuellement surchlorés ; les copolymères qui résultent de la copolymérisation du chlorure de vinyle avec un ou plusieurs comonomères éthyléniquement insaturés et qui renferment au moins 80 % en poids de chlorure de vinyle polymérisé ; l'homopolymère du 1,11,1-dichloroéthylène l'homopolymère du 1,1-difluoroéthylène.

31. Composition selon la revendication 30, **caractérisée en ce que** le polymère thermoplastique est un homopolymère du chlorure de vinyle.

32. Composition selon la revendication 29 **caractérisée en ce que** le polymère thermoplastique est un polybutylène téréphtalate.

33. Composition selon l'une des revendications 28 à 32, **caractérisée en ce que** la teneur en additif choc est comprise entre 1 partie et 30 parties en poids pour 100 parties en poids du polymère thermoplastique mis en oeuvre.

34. Composition selon la revendication 33, **caractérisée en ce que** la teneur en additif choc est comprise entre 5 parties et 10 parties en poids pour 100 parties en poids du polymère thermoplastique mis en oeuvre.

35. Procédé pour obtenir un additif choc selon l'une des revendications 1 à 27 qui consiste à réaliser dans une première étape un noyau réticulé élastomérique constitué d'un coeur et d'une enveloppe puis dans une seconde étape à greffer sur ledit noyau réticulé élastomérique une coquille en polyméthacrylate d'alkyle.

36. Composition selon la revendication 30, **caractérisée en ce que** le polymère thermoplastique est un homopolymère du 1,1-difluoroéthylène.

## Patentansprüche

1. Schlagzähmodifikator vom Kern/Schale-Typ, der aus einem Kern auf der Basis von Alkylacrylat und einer Schale auf der Basis von Polyalkylmethacrylat besteht, **dadurch gekennzeichnet, dass** der Schlagzähmodifikator enthält:
a) 70 bis 90 Gew.-% vernetzten elastomeren Kern, der sich zusammensetzt aus:
1) 20 bis 90 Gew.-% eines Kerns, der aus einem Copolymer (I) eines n-Alkylacrylats, dessen Alkylgruppe 5 bis 12 Kohlenstoffatome aufweist, oder eines Gemisches von Alkylacrylaten, wobei die Anzahl der Kohlenstoffatome der geradkettigen oder verzweigten Alkylgruppen im Bereich von 2 bis 12 liegt, eines polyfunktionellen Vernetzungsmittels, wobei dieses Molekül ungesättigte Gruppen und darunter mindestens eine Gruppe vom Vinyltyp CH₂=C< aufweist, und gegebenenfalls eines polyfunktionellen Pfropfungsmittels besteht, wobei dieses Molekül ungesättigte Gruppen und darunter mindestens eine Gruppe vom Allyltyp CH₂=CH-CH₂- aufweist, wobei der Kern eine molaren Menge des Vernetzungsmittels und gegebenenfalls des Pfropfungsmittels von 0,05 bis 5 % enthält,
2) 80 bis 10 Gew.-% einer Schale, die aus einem Copolymer (II) eines n-Alkylacrylats, dessen Alkylgruppe 4 bis 12 Kohlenstoffatome aufweist, oder eines Gemisches von Alkylacrylaten gemäß der unter 1) angegebenen Definition und eines polyfunktionellen Pfropfungsmittels besteht, wobei dieses Molekül ungesättigte Gruppen und darunter mindestens eine Gruppe vom Allyltyp CH₂=CH-CH₂- aufweist, wobei die Schale das Pfropfungsmittel in einer molaren Menge von 0,05 bis 2,5 % enthält, und
b) 30 bis 10 Gew.-% einer auf den Kern gepfropften Schale, die aus einem Alkylmethacrylatpolymer, dessen Alkylgruppe 1 bis 4 Kohlenstoffatome aufweist, oder aus einem statistischen Copolymer eines Alkylmethacrylats, dessen Alkylgruppe 1 bis 4 Kohlenstoffatome aufweist, und eines Alkylacrylats besteht, dessen Alkylgruppe 1 bis 8 Kohlenstoffatome aufweist, wobei das Alkylacrylat in einer molaren Menge von 5 bis 40 % enthalten ist.

2. Schlagzähmodifikator nach Anspruch 1, **dadurch gekennzeichnet, dass** er enthält:
a) 75 bis 85 % elastomeren vernetzten Kern, und
b) 25 bis 15 % auf den Kern gepfropfte Schale.

3. Schlagzähmodifikator nach einem der Ansprüche 1 oder 2, **dadurch gekennzeichnet, dass** die Alkylgruppe des n-Alkylacrylat in Copolymer (I) 5 bis 8 Kohlenstoffatome und die Alkylgruppe des n-Alkylacrylat in Copolymer (II) 4 bis 8 Kohlenstoffatome aufweist.

4. Schlagzähmodifikator nach einem der Ansprüche 1 bis 3, **dadurch gekennzeichnet, dass** die Alkylgruppen der Alkylacrylate des Gemisches in Copolymer (I) und/oder Copolymer (II) 4 bis 8 Kohlenstoffatome aufweisen.

5. Schlagzähmodifikator nach Anspruch 1, **dadurch gekennzeichnet, dass** das Vernetzungsmittel unter den Derivaten ausgewählt ist, die mindestens zwei Doppelbindungen vom Vinyltyp CH₂=C< besitzen.

6. Schlagzähmodifikator nach Anspruch 1, **dadurch gekennzeichnet, dass** das Vernetzungsmittel unter den Derivaten ausgewählt ist, die eine oder mehrere Doppelbindungen vom Vinyltyp und mindestens eine Doppelbindung vom Allyltyp CH₂=CH-CH₂-besitzen.

7. Schlagzähmodifikator nach einem der Ansprüche 1 bis 5, **dadurch gekennzeichnet, dass** das Vernetzungsmittel das 1,4-Butandioldiacrylat ist.

8. Schlagzähmodifikator nach einem der Ansprüche 1 bis 6, **dadurch gekennzeichnet, dass** das Vernetzungsmittel das Allylacrylat oder das Allylmethacrylat ist.

9. Schlagzähmodifikator nach Anspruch 1, **dadurch gekennzeichnet, dass** das Pfropfungsmittel unter den Derivaten ausgewählt ist, die mindestens zwei Doppelbindungen vom Allyltyp CH₂=CH-CH₂- besitzen.

10. Schlagzähmodifikator nach Anspruch 1, **dadurch gekennzeichnet, dass** das Pfropfungsmittel unter den Derivaten ausgewählt ist, die eine oder mehrere Doppelbindungen vom Allyltyp und mindestens eine Doppelbindung vom Vinyltyp besitzen.

11. Schlagzähmodifikator nach einem der Ansprüche 1 bis 9, **dadurch gekennzeichnet, dass** das Pfropfungsmittel das Diallylmaleat ist.

12. Schlagzähmodifikator nach einem der Ansprüche 1 bis 10, **dadurch gekennzeichnet, dass** das Pfropfungsmittel das Allylacrylat oder das Allylmethacrylat ist.

13. Schlagzähmodifikator nach einem der Ansprüche 1 bis 12, **dadurch gekennzeichnet, dass** der Kern des vernetzen Kerns eine molare Menge des Vernetzungsmittels und gegebenenfalls des Pfropfungsmittels von 0,5 bis 1,5 % enthält.

14. Schlagzähmodifikator nach einem der Ansprüche 1 bis 4 und 10 bis 12, **dadurch gekennzeichnet, dass** die Schale des vernetzen Kerns das Pfropfungsmittel in einer molaren Menge von 0,5 bis 1,5 % enthält.

15. Schlagzähmodifikator nach einem der Ansprüche 1 bis 4, **dadurch gekennzeichnet, dass** das statistische Copolymer der Schale das Alkylacrylat in einer molaren Menge von 10 bis 20 % enthält.

16. Schlagzähmodifikator nach einem der Ansprüche 1 bis 3, **dadurch gekennzeichnet, dass** es sich bei den zur Bildung des Copolymer (I) verwendeten n-Alkylacrylaten um das n-Pentylacrylat, n-Hexylacrylat, n-Heptylacrylat oder n-Octylacrylat handelt.

17. Schlagzähmodifikator nach einem der Ansprüche 1 bis 3, **dadurch gekennzeichnet, dass** es sich bei den zur Bildung des Copolymer (II) verwendeten n-Alkylacrylaten um das n-Butyl-acrylat, n-Pentylacrylat, n-Hexylacrylat, n-Heptylacrylat oder n-Octylacrylat handelt.

18. Schlagzähmodifikator nach den Ansprüchen 16 und 17, **dadurch gekennzeichnet, dass** das zur Bildung der Copolymere (I) und (II) verwendete n-Alkylacrylat das n-Pentylacrylat ist.

19. Schlagzähmodifikator nach den Ansprüchen 16 und 17, **dadurch gekennzeichnet, dass** das zur Bildung der Copolymere (I) und (II) verwendete n-Alkylacrylat das n-Hexylacrylat ist.

20. Schlagzähmodifikator nach den Ansprüchen 16 und 17, **dadurch gekennzeichnet, dass** das zur Bildung der Copolymere (I) und (II) verwendete n-Alkylacrylat das n-Heptylacrylat ist.

21. Schlagzähmodifikator nach den Ansprüchen 16 und 17, **dadurch gekennzeichnet, dass** das zur Bildung der Copolymere (I) und (II) verwendete n-Alkylacrylat das n-Octylacrylat ist.

22. Schlagzähmodifikator nach den Ansprüchen 16 und 17, **dadurch gekennzeichnet, dass** das zur Bildung des Copolymer (I) verwendete n-Alkylacrylat das n-Octylacrylat und das zur Bildung des Copolymer (II) verwendete n-Alkylacrylat das n-Butylacrylat ist.

23. Schlagzähmodifikator nach einem der Ansprüche 1 bis 3, **dadurch gekennzeichnet, dass** es sich bei den geradkettigen oder verzweigten Alkylacrylaten, die das Gemisch von Alkylacrylaten bilden, die zur Herstellung der Copolymere (I) und/oder (II) verwendet werden, um Ethylacrylat, n-Propylacrylat, n-Butylacrylat, Amylacrylat, 2-Methylbutylacrylat, 2-Ethylhexylacrylat, n-Hexylacrylat, n-Octylacrylat, n-Decylacrylat, n-Dodecylacrylat und 3,5,5-Trimethylhexylacrylat handelt.

24. Schlagzähmodifikator nach Anspruch 23, **dadurch gekennzeichnet, dass** der Gewichtsanteil des n-Alkylacrylat mindestens 10 Gew.-% des Gemisches der Alkylacrylate ausmacht.

25. Schlagzähmodifikator nach Anspruch 24, **dadurch gekennzeichnet, dass** das n-Alkylacrylat in einem Gewichtsanteil von 20 bis 80 Gew.-% des Gemisches der Alkylacrylate verwendet wird.

26. Schlagzähmodifikator nach einem der Ansprüche 23 bis 25, **dadurch gekennzeichnet, dass** das n-Alkylacrylat das n-Octylacrylat ist.

27. Schlagzähmodifikator nach Anspruch 1 oder 2, **dadurch gekennzeichnet, dass** das zur Bildung der Schale verwendete Alkylmethacrylat das Methylmethacrylat ist.

28. Zusammensetzung mit thermoplastischem Polymer, die einen Schlagzähmodifikator nach einem der Ansprüche 1 bis 27 enthält.

29. Zusammensetzung nach Anspruch 28, **dadurch gekennzeichnet, daß** das thermoplastische Polymer aus einem oder mehreren Polymeren vom Polykondensattyp besteht, insbesondere Polyestern, wie Polybutylenterephthalat, Polyamiden, Polyesteretheramiden, Polycarbonaten und Legierungen der genannten Polymere.

30. Zusammensetzung nach Anspruch 28, **dadurch gekennzeichnet, daß** das thermoplastische Polymer aus einem oder mehreren Polymeren besteht, die unter den Polyalkylmethacrylaten und insbesondere Polymethylmethacrylat; Homopolymeren von Vinylchlorid, die gegebenenfalls nachchloriert wurden; Copolymeren, die bei der Copolymerisation von Vinylchlorid und einem oder mehreren ethylenisch ungesättigten Comonomeren gebildet werden und die mindestens 80 Gew.-% polymerisiertes Vinylchlorid enthalten; dem 1,1-Dichlorethylen-Homopolymer; und dem 1,1-Difluorethylen-Homopolymer ausgewählt sind.

31. Zusammensetzung nach Anspruch 30, **dadurch gekennzeichnet, daß** das thermoplastische Polymer ein Vinylchlorid-Homopolymer ist.

32. Zusammensetzung nach Anspruch 29, **dadurch gekennzeichnet, daß** das thermoplastische Polymer ein Polybutylenterephthalat ist.

33. Zusammensetzung nach einem der Ansprüche 28 bis 32, **dadurch gekennzeichnet, daß** der Mengenanteil des Schlagzähmodifikators im Bereich von 1 bis 30 Gewichtsteile auf 100 Gewichtsteile des verwendeten thermoplastischen Polymers liegt.

34. Zusammensetzung nach Anspruch 33, **dadurch gekennzeichnet, daß** der Mengenanteil des Schlagzähmodifikators im Bereich von 5 bis 10 Gewichtsteile auf 100 Gewichtsteile des verwendeten thermoplastischen Polymers liegt.

35. Verfahren zur Herstellung eines Schlagzähmodifikators nach einem der Ansprüche 1 bis 27, das darin besteht, in einem ersten Schritt einen vernetzten elastomeren Kern herzustellen, der aus einem Kern und einer Schale besteht, und dann in einem zweiten Schritt auf den vernetzten elastomeren Kern eine Schale aus Polyalkylmethacrylat zu pfropfen.

36. Zusammensetzung nach Anspruch 30, **dadurch gekennzeichnet, daß** das thermoplastische Polymer das 1,1-Difluorethylen-Homopolymer ist.

## Claims

1. Impact additive of the core/shell type composed of a core based on alkyl acrylate and a shell based on poly(alkyl methacrylate), **characterized in that** the said impact additive comprises from:
a) 70 % to 90 % by weight of a crosslinked elastomeric core which is composed:
1) of 20 % to 90 % by weight of a nucleus composed of a copolymer (I) of n-alkyl acrylate, the alkyl group of which has a carbon number ranging from 5 to 12, or of a mixture of alkyl acrylates, the linear or branched alkyl group of which has a carbon number ranging from 2 to 12, of a polyfunctional crosslinking agent possessing unsaturated groups in its molecule, at least one of which is of CH₂=C< vinylic type, and optionally of a polyfunctional grafting agent possessing unsaturated groups in its molecule, at least one of which is of CH₂=CH-CH₂- allylic type, the said nucleus containing a molar amount of crosslinking agent and optionally of grafting agent ranging from 0.05 % to 5 %,
2) of 80 % to 10 % by weight of a covering composed of a copolymer (II) of n-alkyl acrylate, the alkyl group of which has a carbon number ranging from 4 to 12, or of a mixture of alkyl acrylates as defined above in 1) and of a polyfunctional grafting agent possessing unsaturated groups in its molecule, at least one of which is of CH₂=CH-CH₂- allylic type, the said covering containing a molar amount of grafting agent ranging from 0.05 % to 2.5 %,
b) 30 % to 10 % by weight of a shell grafted onto the said core composed of a polymer of an alkyl methacrylate, the alkyl group of which has a carbon number ranging from 1 to 4, or alternatively of a statistical copolymer of an alkyl methacrylate, the alkyl group of which has a carbon number ranging from 1 to 4, and of an alkyl acrylate, the alkyl group of which has a carbon number ranging from 1 to 8, containing a molar amount of alkyl acrylate ranging from 5 % to 40 %.

2. Impact additive according to Claim 1, **characterized in that** the said impact additive comprises from:
a) 75 % to 85 % of a crosslinked elastomeric core,
b) 25 % to 15 % of a shell grafted onto the said core.

3. Impact additive according to either of Claims 1 and 2, **characterized in that** the alkyl group of the n-alkyl acrylate of the copolymer (I) has a carbon number ranging from 5 to 8 and that the alkyl group of the n-alkyl acrylate of the copolymer (II) has a carbon number ranging from 4 to 8.

4. Impact additive according to one of Claims 1 to 3, **characterized in that** the alkyl group of the alkyl acrylates of the mixture forming part of the copolymers (I) and/or (II) has a carbon number ranging from 4 to 8.

5. Impact additive according to Claim 1, **characterized in that** the crosslinking agent is chosen from derivatives possessing at least two double bonds of CH₂=C< vinylic type.

6. Impact additive according to Claim 1, **characterized in that** the crosslinking agent is chosen from derivatives possessing one or a number of double bonds of vinylic type and at least one double bond of CH₂=CH-CH₂- allylic type.

7. Impact additive according to either of Claims 1 and 5, **characterized in that** the crosslinking agent is 1,4-butanediol diacrylate.

8. Impact additive according to either of Claims 1 and 6, **characterized in that** the crosslinking agent is allyl acrylate or methacrylate.

9. Impact additive according to Claim 1, **characterized in that** the grafting agent is chosen from derivatives possessing at least two double bonds of CH₂=CH-CH₂- allylic type.

10. Impact additive according to Claim 1, **characterized in that** the grafting agent is chosen from derivatives possessing one or a number of double bonds of allylic type and at least one double bond of vinylic type.

11. Impact additive according to either of Claims 1 and 9, **characterized in that** the grafting agent is diallyl maleate.

12. Impact additive according to either of Claims 1 and 10, **characterized in that** the grafting agent is allyl acrylate or methacrylate.

13. Impact additive according to one of Claims 1 to 12, **characterized in that** the nucleus of the crosslinked core has a molar amount of crosslinking agent and optionally of grafting agent of between 0.5 % and 1.5 %.

14. Impact additive according to one of Claims 1 to 4 and 10 to 12, **characterized in that** the covering of the crosslinked core has a molar amount of grafting agent of between 0.5 % and 1.5 %.

15. Impact additive according to one of Claims 1 to 4, **characterized in that** the statistical copolymer of the shell has a molar amount of alkyl acrylate of between 10 % and 20 %.

16. Impact additive according to either of Claims 1 and 3, **characterized in that** the n-alkyl acrylates used to form the copolymer (I) are n-pentyl acrylate, n-hexyl acrylate, n-heptyl acrylate and n-octyl acrylate.

17. Impact additive according to one of Claims 1 to 3, **characterized in that** the n-alkyl acrylates used to form the copolymer (II) are n-butyl acrylate, n-pentyl acrylate, n-hexyl acrylate, n-heptyl acrylate and n-octyl acrylate.

18. Impact additive according to Claims 16 and 17, **characterized in that** the n-alkyl acrylate for forming the copolymers (I) and (II) is n-pentyl acrylate.

19. Impact additive according to Claims 16 and 17, **characterized in that** the n-alkyl acrylate for forming the copolymers (I) and (II) is n-hexyl acrylate.

20. Impact additive according to Claims 16 and 17, **characterized in that** the n-alkyl acrylate for forming the copolymers (I) and (II) is n-heptyl acrylate.

21. Impact additive according to Claims 16 and 17, **characterized in that** the n-alkyl acrylate for forming the copolymers (I) and (II) is n-octyl acrylate.

22. Impact additive according to Claims 16 and 17, **characterized in that** the n-alkyl acrylate for forming the copolymer (I) is n-octyl acrylate and that the n-alkyl acrylate for forming the copolymer (II) is n-butyl acrylate.

23. Impact additive according to one of Claims 1 to 3, **characterized in that** the linear or branched alkyl acrylates constituting the mixture of alkyl acrylates used for forming the copolymers (I) and/or (II) are ethyl acrylate, n-propyl acrylate, n-butyl acrylate, amyl acrylate, 2-methylbutyl acrylate, 2-ethylhexyl acrylate, n-hexyl acrylate, n-octyl acrylate, n-decyl acrylate, n-dodecyl acrylate and 3,5,5-trimethylhexyl acrylate.

24. Impact additive according to Claim 23, **characterized in that** use is made of an amount by weight of n-alkyl acrylate at least equal to 10 % by weight of the mixture of alkyl acrylates.

25. Impact additive according to Claim 24, **characterized in that** use is made of an amount by weight of n-alkyl acrylate of between 20 % and 80 % by weight of the mixture of alkyl acrylates.

26. Impact additive according to one of Claims 23 to 25, **characterized in that** the n-alkyl acrylate is n-octyl acrylate.

27. Impact additive according to Claim 1 or 2, **characterized in that** the alkyl methacrylate used to form the shell is methyl methacrylate.

28. Thermoplastic polymer composition containing an impact additive according to any one of Claims 1 to 27.

29. Composition according to Claim 28, **characterized in that** the thermoplastic polymer is composed of one or a number of polymers of the polycondensates type, in particular polyesters, such as poly(butylene terephthalate), polyamides, polyesteretheramides, polycarbonates and alloys of the abovementioned polymers.

30. Composition according to Claim 28, **characterized in that** the thermoplastic polymer is composed of one or a number of polymers chosen from the group formed by poly(alkyl methacrylate)s and in particular poly(methyl methacrylate); optionally superchlorinated vinyl chloride homopolymers; the copolymers which result from the copolymerization of vinyl chloride with one or a number of ethylenically unsaturated comonomers and which contain at least 80 % by weight of polymerized vinyl chloride; 1,1-dichloroethylene homopolymer; 1,1-difluoroethylene homopolymer.

31. Composition according to Claim 30, **characterized in that** the thermoplastic polymer is a vinyl chloride homopolymer.

32. Composition according to Claim 29, **characterized in that** the thermoplastic polymer is a poly(butylene terephthalate).

33. Composition according to one of Claims 28 to 32, **characterized in that** the content of impact additive is between 1 part and 30 parts by weight per 100 parts by weight of the thermoplastic polymer used.

34. Composition according to Claim 33, **characterized in that** the content of impact additive is between 5 parts and 10 parts by weight per 100 parts by weight of the thermoplastic polymer used.

35. Process for producing an impact additive according to one of Claims 1 to 27 which comprises the preparation, in a first stage, of a crosslinked elastomeric core composed of a nucleus and of a covering and then, in a second stage, the grafting onto the said crosslinked elastomeric core of a shell made of poly(alkyl methacrylate).

36. Composition according to Claim 30, **characterized in that** the thermoplastic polymer is a 1,1-difluoroethylene homopolymer.
